(19) Europäisches Patentamt
European Patent Office
Office européen des brevets

(11) **EP 3 413 035 B1**

(12) **FASCICULE DE BREVET EUROPEEN**

(45) Date de publication et mention
de la délivrance du brevet:
**04.11.2020 Bulletin 2020/45**

(51) Int Cl.:
***G01N 21/64*** *(2006.01)*

(21) Numéro de dépôt: **18176395.4**

(22) Date de dépôt: **07.06.2018**

(54) **PROCEDE DE DETERMINATION DES TEMPS DE DECLIN D'UN SIGNAL DE LUMINESCENCE**

VERFAHREN ZUR BESTIMMUNG VON ABFALLZEITEN EINES LUMINESZENZSIGNALS

METHOD FOR DETERMINING DECAY TIMES OF A LUMINESCENCE SIGNAL

(84) Etats contractants désignés:
**AL AT BE BG CH CY CZ DE DK EE ES FI FR GB
GR HR HU IE IS IT LI LT LU LV MC MK MT NL NO
PL PT RO RS SE SI SK SM TR**

(30) Priorité: **08.06.2017 FR 1755114**

(43) Date de publication de la demande:
**12.12.2018 Bulletin 2018/50**

(73) Titulaire: **Commissariat à l'Energie Atomique et
aux Energies
Alternatives
75015 Paris (FR)**

(72) Inventeurs:
• **LICITRA, Christophe
38100 GRENOBLE (FR)**
• **HAPIUK, Dimitri
64170 Artix (FR)**

(74) Mandataire: **Cabinet Camus Lebkiri
25 rue de Maubeuge
75009 Paris (FR)**

(56) Documents cités:
**GB-A- 2 089 029      JP-A- 2007 255 893
US-A1- 2007 086 916**

• ASAKURA D ET AL: "Photoemission study of
YBa2Cu3Oy thin films under light illumination",
JOURNAL OF ELECTRON SPECTROSCOPY AND
RELATED PHENOMENA, ELSEVIER SCIENCE
PUBLISHERS, AMSTERDAM, NL, vol. 144-147, 2
juin 2005 (2005-06-02), pages 499-502,
XP025265171, ISSN: 0368-2048, DOI:
10.1016/J.ELSPEC.2005.01.134 [extrait le
2005-06-01]
• Guro Marie Wyller: "Correlation of Defect
Luminescence and Recombination in
Multicrystalline Silicon", Master Thesis, 2 janvier
2015 (2015-01-02), pages 1-120, XP055449298,
Extrait de l'Internet:
URL:https://brage.bibsys.no/xmlui/bitstrea
m/handle/11250/294076/wyller2015.pdf?seque
nce=1 [extrait le 2018-02-08]
• BOROWIK L ET AL: "Measuring the lifetime of
silicon nanocrystal solar cell photo-carriers by
using Kelvin probe force microscopy and x-ray
photoelectron spectroscopy",
NANOTECHNOLOGY, IOP, BRISTOL, GB, vol. 25,
no. 26, 11 juin 2014 (2014-06-11), page 265703,
XP020266871, ISSN: 0957-4484, DOI:
10.1088/0957-4484/25/26/265703 [extrait le
2014-06-11]

**Description**

**DOMAINE TECHNIQUE DE L'INVENTION**

La présente invention concerne le domaine des méthodes de mesure de photoluminescence résolue en temps et plus spécifiquement celui d'un procédé de détermination des temps de déclin d'un signal de luminescence d'une région d'intérêt d'un échantillon.

**ARRIERE-PLAN TECHNOLOGIQUE DE L'INVENTION**

La mesure du comportement temporel de la luminescence émise par un matériau permet de caractériser les processus de recombinaison des paires électron-trou qui conduisent à l'émission de photons et donc contribue à identifier la nature de ces centres luminescents (défauts, impuretés, ...). Le comportement temporel est caractérisé par le temps de déclin du signal de luminescence appelé également temps de vie et noté $\tau$. Dans un matériau, le signal de luminescence peut provenir de plusieurs recombinaisons émettant à des longueurs d'onde $\lambda$ différentes et donc peut présenter différents temps de vie caractéristiques.

De façon connue, les temps de vie peuvent être mesurés par des techniques résolues en temps comme la photoluminescence dans laquelle la luminescence est excitée par un faisceau laser.

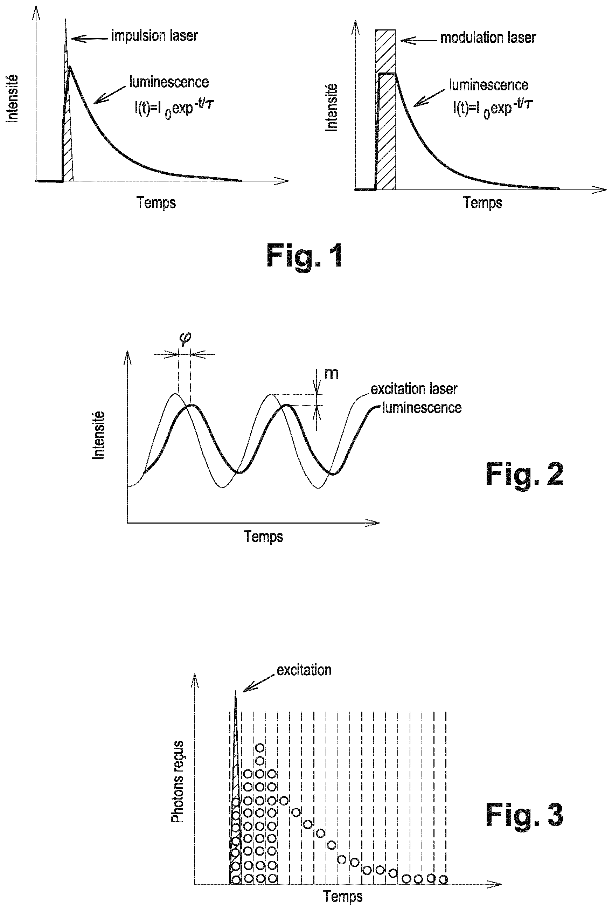

Parmi les techniques de mesure par photoluminescence résolue en temps les plus courantes, on peut notamment citer la mesure directe illustrée en figure 1. Dans cette configuration, un laser pulsé dont la largeur d'impulsion est largement inférieure à $\tau$ est envoyé de manière répétitive sur le matériau. On peut également trouver des configurations à laser continu dont l'intensité est modulée dans le temps par un chopper mécanique ou par un générateur de signaux (modulation en créneau). Un détecteur rapide de type photomultiplicateur ou photodiode à avalanche est utilisé pour obtenir la trace temporelle de la luminescence émise juste après l'excitation laser. Généralement l'intensité de photoluminescence recueillie est de la forme :

$$I(t) = I_0 e^{-t/\tau}.$$

On notera que d'autres formes d'intensité sont possibles (double exponentielle, hyperbole, etc.). Cette technique de mesure directe est simple à mettre en œuvre pour des mesures mono-longueur d'onde grâce à l'utilisation d'un monochromateur ou d'un filtre passe-bande à la longueur d'onde d'intérêt. Elle pose toutefois quelques problèmes. Ainsi, cette méthode, quoique simple, nécessite d'avoir une chaîne de mesure rapide, sensible et linéaire, ces conditions étant souvent difficiles à satisfaire en même temps. En outre, elle est mono-longueur d'onde de sorte que si l'on souhaite obtenir un spectre couvrant plusieurs longueurs d'onde, il convient de répéter la mesure pour chaque longueur d'onde.

Une autre méthode connue (illustrée en figure 2) est celle du décalage de phase ou « phase-shift method » selon la terminologie anglaise. Selon cette méthode, l'intensité d'excitation est modulée sinusoïdalement dans le temps à une fréquence angulaire $\omega$. La réponse de luminescence est alors également modulée dans le temps mais des temps de vie non nuls vont provoquer un déphasage du signal de luminescence par rapport à l'excitation ainsi qu'un changement d'amplitude. Ce déphasage et changement d'amplitude permettent alors de calculer le temps de vie correspondant. Dans le cas d'un déclin en simple exponentielle, le temps de vie peut être estimé grâce aux relations :

$$tan\varphi = \omega\tau$$

$$m = (1 + \omega^2\tau^2)^{-\frac{1}{2}} = cos\varphi$$

Pour appliquer efficacement cette méthode, la fréquence angulaire doit être de l'ordre de $1/\tau$. Cette méthode présente également certains inconvénients. Tout d'abord, elle est limitée aux déclins en simple exponentielle. En outre, comme la précédente, elle est mono-longueur d'onde de sorte que si l'on souhaite obtenir un spectre couvrant plusieurs longueurs d'onde, il convient de répéter la mesure pour chaque longueur d'onde.

Une troisième méthode connue (illustrée en figure 3) est celle du comptage de photons TCSPC (« Time Correlated Single Photon Counting »). Cette méthode est basée sur le caractère statistique de l'émission de photons par luminescence. Suite à une excitation, la luminescence croit puis décroit dans le temps. Les photons sont émis aléatoirement dans toutes les directions et certains sont captés par le détecteur. La courbe temporelle de montée et déclin de la luminescence est obtenue en répétant maintes fois l'excitation et en traçant l'histogramme des détections de photons.

Comme les précédentes, cette méthode est mono-longueur d'onde de sorte que si l'on souhaite obtenir un spectre couvrant plusieurs longueurs d'onde, il convient de répéter la mesure pour chaque longueur d'onde. En outre, elle nécessite une faible intensité de luminescence pour pouvoir compter des photons uniques. Il faut également un grand nombre d'événements afin d'avoir une bonne statistique. Ainsi les mesures peuvent durer de plusieurs minutes à plusieurs heures.

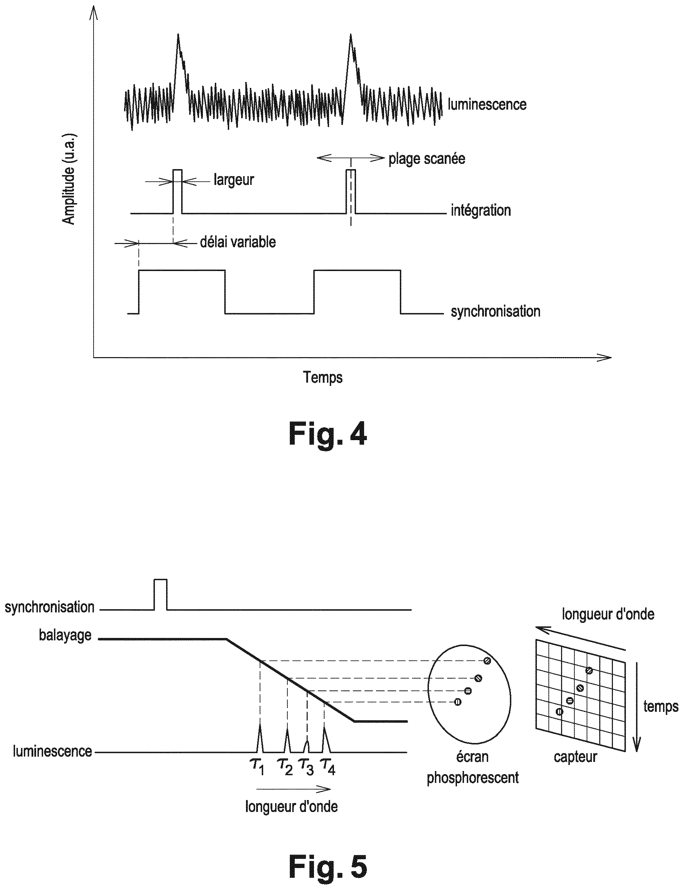

Une quatrième méthode connue (illustrée en figure 4) est celle consistant à utiliser un intégrateur de type box car ou « boxcar averager » selon la terminologie anglaise. L'intégrateur boxcar est un système électronique qui permet d'intégrer un signal électrique périodique après un temps d'attente défini (délai), sur une période de temps donnée (largeur) et ce à de multiples reprises afin d'améliorer le rapport signal sur bruit. Lors de mesures de temps de vie, on fait varier la valeur de délai afin de reconstruire la forme temporelle du signal. Cette méthode nécessite un traitement électronique complexe et présente également l'inconvénient d'être mono-longueur d'onde.

Une cinquième méthode connue consiste à utiliser une caméra à balayage de fente, dite « Streak camera ». Le principe de la « Streak caméra » est illustré en figure 5.

La caméra à balayage de fente permet de réaliser des mesures à la fois temporelles et multi-longueurs d'onde. Pour l'analyse spectrale, les longueurs d'onde sont d'abord séparées spatialement en amont de la caméra par un instrument dispersif (type spectromètre) puis envoyées parallèlement sur la fente d'entrée de la caméra. La caméra dispose d'une photocathode transformant les photons en électrons qui sont ensuite accélérés vers un écran phosphorescent pour être détectés par un capteur à 2 dimensions. Le balayage temporel est assuré par des déflecteurs à plaque asservis qui provoquent un décalage spatial des photoélectrons au cours du temps dans la direction perpendiculaire à la fente d'entrée. On obtient alors sur l'écran une trace spectrale selon la direction parallèle à la fente et une trace temporelle selon la direction perpendiculaire. Différents modèles de caméras à balayage de fente existent selon le régime de temps que l'on souhaite mesurer. Des résolutions temporelles inférieures à 1 ps peuvent être obtenues. L'inconvénient majeur de la caméra à balayage de fente est qu'elle est extrêmement onéreuse.

Une approche différente des techniques classiques de mesure de temps de vie consiste à enregistrer un signal obtenu en excitant l'échantillon avec une lumière modulée et en utilisant des techniques telles que des mesures XPS (« Xray Photoelectron Spectroscopy ») ou KFM (« Kelvin probe Force Microscopy »). Cette approche est notamment décrite dans l'article « Measuring the lifetime of silicon nanocrystal solar cell photo-carriers by using Kelvin probe force microscopy and x-ray photoelectron spectroscopy » (Nanotechnology - 04 juillet 2014 - Borowik et al.). Avec le KFM on va scanner la surface de l'échantillon à l'aide d'une pointe et mesurer le potentiel de surface en chaque point. Avec l'XPS on va mesurer l'énergie cinétique des électrons photo-émis par la surface sous l'effet de rayons-X. La mesure KFM ou XPS sous illumination avec une lumière modulée permet par calcul de remonter au temps de vie des porteurs minoritaires photogénérés. La mise en œuvre de ces techniques présente des inconvénients. En effet, la recombinaison des porteurs photogénérés peut donner lieu à plusieurs transitions radiatives (exciton, exciton lié, recombinaison sur une impureté, ...) ou non radiatives et donc à des temps de vie différents. Par KFM ou XPS, si les temps de vie de différentes transitions sont du même ordre de grandeur ils ne pourront pas être déterminés séparément alors qu'en photoluminescence une mesure résolue spectralement permet de séparer ces contributions qui émettent à des longueurs d'onde différentes et ainsi de calculer leur temps de vie. Des temps de vie différents de plusieurs ordres de grandeur peuvent néanmoins être mesurés séparément par KFM et XPS. En revanche la photoluminescence ne mesure que des recombinaisons radiatives alors que le KFM ou l'XPS permettent d'avoir accès aux temps de vie des recombinaisons non radiatives. En outre, ces mesures KFM et XPS ne peuvent être réalisées que sur des échantillons présentant une modification de la répartition des charges sous l'effet de l'illumination. En effet les porteurs positifs et négatifs photogénérés doivent être séparés localement afin de rendre sensible la mesure KFM ou XPS. C'est le cas en présence d'une jonction P/N qui repousse les porteurs minoritaires ou sur une surface non passivée qui attire les porteurs minoritaires.

## RESUME DE L'INVENTION

L'invention vise à apporter une solution aux problèmes évoqués précédemment en proposant un procédé de détermination des temps de déclin d'un signal de luminescence d'une région d'intérêt d'un échantillon, ledit procédé étant adapté à n'importe quel type d'échantillon (i.e. sans limitation à une jonction P/N ou une surface non passivée), permettant de réaliser des mesures multi-longueurs d'onde des temps de vie propres à chaque transition sans avoir à répéter la mesure à plusieurs longueurs d'onde, et nécessitant une installation beaucoup moins onéreuse que la technique utilisant une caméra à balayage de fente.

Pour ce faire, l'objet de l'invention concerne donc un procédé de détermination des temps de déclin d'un signal de luminescence d'une région d'intérêt d'un échantillon comportant les étapes suivantes :

- Excitation de ladite région d'intérêt au moyen d'une source laser modulée en créneau à une fréquence donnée ;
- Séparation spectrale du signal de luminescence émis par ladite région d'intérêt en une pluralité de signaux de luminescence associés chacun à une longueur d'onde donnée, dits signaux mono-longueur d'onde ;
- Transmission desdits signaux mono-longueur d'onde vers un capteur linéaire comportant une pluralité de mono-capteurs disposés linéairement, chacun desdits mono-capteurs étant adapté pour recevoir un desdits signaux mono-longueur d'onde ;
- Détermination de l'intensité moyenne de chacun desdits signaux mono-longueur d'onde reçus par le capteur linéaire ;
les étapes précédentes étant répétées pour une pluralité de fréquences de modulation de la source laser,
le procédé comportant en outre une étape de détermination des temps de déclin du signal de luminescence de la région d'intérêt, chaque temps de déclin étant déterminé, pour une longueur d'onde donnée, à partir de l'évolution de l'intensité moyenne du signal mono-longueur d'onde à ladite longueur d'onde en fonction de la fréquence de modulation du laser.

Grâce à l'invention, comme dans le cas d'une « streak caméra » mais avec une installation beaucoup moins couteuse, on peut réaliser des mesures à la fois temporelles et multi-longueurs d'onde pour remonter indirectement au temps de vie en utilisant un simple capteur linéaire tel qu'un capteur CCD « Charged Coupled Device » (capteur à une dimension n'ayant pas de résolution temporelle) contrairement au capteur à deux dimensions utilisé dans le cas une « streak caméra » nécessaire pour obtenir une trace spectrale selon une dimension et une trace temporelle selon l'autre dimension. En d'autres termes, on entend par capteur linéaire un capteur d'intensité lumineuse muni de plusieurs pixels ou mono-capteurs disposés linéairement et ne disposant pas d'une résolution temporelle. Dans le cas de l'invention, seul la trace spectrale est captée par le capteur linéaire pour les différentes longueurs d'onde émises par la région d'intérêt de l'échantillon à analyser. A cette fin, un laser modulé périodiquement en créneau est utilisé pour exciter l'échantillon et obtenir la photoluminescence. Le signal de luminescence est séparé spectralement par un dispositif tel qu'un spectromètre puis détecté sur le capteur linéaire, chaque pixel du capteur linéaire mesurant une portion du spectre. A une fréquence de modulation du laser donnée, le capteur linéaire détecte un spectre de luminescence moyen car il n'a aucune résolution temporelle. Pour chaque longueur d'onde, le signal moyen est fonction des caractéristiques du faisceau laser incident, du rendement de luminescence et du temps de vie à cette longueur d'onde. Le procédé est alors réitéré pour différentes fréquences de modulation du laser pour remonter par calcul aux temps de vie propres à chaque transition à chaque longueur d'onde. Ainsi, on reproduit le fonctionnement d'une « streak caméra » avec une dimension en moins sur le capteur linéaire et un coût considérablement réduit.

Outre les caractéristiques qui viennent d'être évoquées dans le paragraphe précédent, le procédé selon l'invention peut présenter une ou plusieurs caractéristiques complémentaires parmi les suivantes, considérées individuellement ou selon toutes les combinaisons techniquement possibles :

- ledit capteur linéaire est un capteur CCD ;
- la séparation spectrale est obtenue à l'aide d'un spectromètre ;
- le procédé comporte en outre une étape de détermination des temps de montée du signal de luminescence de la région d'intérêt, chaque temps de montée étant déterminé, pour une longueur d'onde donnée, à partir de l'évolution de l'intensité moyenne du signal mono-longueur d'onde à ladite longueur d'onde en fonction de la fréquence de modulation du laser ;
- l'étape de détermination des temps de déclin est réalisée en ajustant la courbe d'évolution de l'intensité moyenne du signal mono-longueur d'onde en fonction de la fréquence de modulation du laser et une formule représentative de la dépendance entre l'intensité moyenne du signal mono-longueur d'onde et la fréquence de modulation du laser ;
- selon un premier mode de réalisation non limitatif où le temps de montée est négligeable, ladite formule est donnée par la relation suivante:

$$I_{CCD}(T) \propto \frac{I_0}{2} + I_0 \tau_{déclin} \left( 1 - \exp\left( -\frac{T}{2\tau_{déclin}} \right) \right)$$

dans laquelle,

$I_{CCD}(T)$ désigne l'intensité moyenne du signal mono-longueur d'onde,
T désigne la période du signal en créneau de la source laser,
$I_0$ désigne l'intensité de luminescence maximale, et
$\tau_{déclin}$ désigne le temps de déclin ;

- selon un second mode de réalisation non limitatif où le temps de montée n'est pas négligeable, ladite formule est donnée par la relation suivante:

$$I_{CCD}(T) \propto \frac{I_0}{2} + (I_O - I_A)\tau_{montée}\left(\exp\left(-\frac{T}{2\tau_{montée}}\right) - 1\right)$$
$$+ \left[I_A + (I_O - I_A)\left(1 - \exp\left(-\frac{T}{2\tau_{montée}}\right)\right)\right]\tau_{déclin}\left(1 - \exp\left(-\frac{T}{2\tau_{déclin}}\right)\right)$$

dans laquelle,

$I_{CCD}(T)$ désigne l'intensité moyenne du signal mono-longueur d'onde,
T désigne la période du signal en créneau de la source laser,
$I_0$ désigne l'intensité de luminescence maximale,
$\tau_{déclin}$ désigne le temps de déclin,
$\tau_{montée}$ désigne le temps de montée,

avec

$$I_A = \frac{I_O\left(1 - \exp\left(-\frac{T}{2\tau_{montée}}\right)\right)\exp\left(-\frac{T}{2\tau_{déclin}}\right)}{1 - \exp\left(-\frac{T}{2\tau_{montée}}\right)\exp\left(-\frac{T}{2\tau_{déclin}}\right)}$$

- les étapes sont répétées pour au moins trois fréquences de modulation de la source laser ;
- le rapport cyclique du signal de la source laser modulée en créneau à une fréquence donnée est adapté en fonction de la durée des temps de déclin à mesurer.

La présente invention a également pour objet une installation de détermination des temps de déclin d'un signal de luminescence d'une région d'intérêt d'un échantillon comportant :

- une source laser modulée en créneau à une fréquence donnée, ladite fréquence étant variable, adaptée pour exciter ladite région d'intérêt ;
- un séparateur spectral adapté pour séparer spectralement le signal de luminescence émis par ladite région d'intérêt en une pluralité de signaux de luminescence associés chacun à une longueur d'onde donnée, dits signaux mono-longueur d'onde ;

- un capteur linéaire comportant une pluralité de mono-capteurs disposés linéairement ;
- un dispositif optique adapté pour transmettre lesdits signaux mono-longueur d'onde vers ledit capteur linéaire, chacun desdits mono-capteurs étant adapté pour recevoir un desdits signaux mono-longueur d'onde ;
- des moyens de calcul adaptés pour déterminer l'intensité moyenne de chacun desdits signaux mono-longueur d'onde reçu par le capteur linéaire et pour déterminer des temps de déclin du signal de luminescence de la région d'intérêt, chaque temps de déclin étant déterminé, pour une longueur d'onde donnée, à partir de l'évolution de l'intensité moyenne du signal mono-longueur d'onde à ladite longueur d'onde en fonction de la fréquence de modulation du laser.

Les moyens de calculs sont par exemple formés par un ou plusieurs calculateur(s) ou un ou plusieurs microprocesseur(s) programmé(s).
L'invention et ses différentes applications seront mieux comprises à la lecture de la description qui suit et à l'examen des figures qui l'accompagnent.

**BREVE DESCRIPTION DES FIGURES**

Les figures sont présentées à titre indicatif et nullement limitatif de l'invention.

- La figure 1 illustre le principe de la mesure directe du temps de déclin ;
- La figure 2 illustre le principe de la méthode du décalage de phase pour la mesure du temps de déclin ;
- La figure 3 illustre le principe de la méthode du comptage des photons pour la mesure du temps de déclin ;
- La figure 4 illustre le principe de l'intégrateur boxcar pour la mesure du temps de déclin ;
- La figure 5 illustre le principe de la caméra à balayage de fente pour la mesure du temps déclin ;

- La figure 6 représente schématiquement une installation de détermination des temps de déclin d'un signal de luminescence d'une région d'intérêt d'un échantillon selon un mode de réalisation de l'invention ;
- La figure 7 représente les différentes étapes du procédé de détermination des temps de déclin d'un signal de luminescence d'une région d'intérêt d'un échantillon selon un mode de réalisation de l'invention ;
- La figure 8 illustre la forme des signaux d'excitation laser pour trois fréquences de modulation, des intensités moyennes de luminescence en fonction de la longueur d'onde de luminescence pour les trois fréquences de modulation, des intensités moyennes de luminescence en fonction de la fréquence de modulation laser pour trois longueurs d'onde et des temps de déclin de la région d'intérêt en fonction de la longueur d'onde ;
- La figure 9 illustre la forme du signal laser modulé en créneau et du signal de luminescence obtenu sous excitation en fonction du temps ;
- La figure 10 illustre une pluralité de signaux laser modulés en créneau à différentes fréquences de modulation et les signaux de luminescence qui correspondent ;
- La figure 11 montre trois exemples de dépendance de l'intensité mesurée de luminescence selon la fréquence laser pour trois temps de déclin différents ;
- La figure 12 montre quatre formes de signaux de luminescence différents pour un même temps de déclin, une même période du signal laser et quatre temps de montée différents ;
- La figure 13 montre quatre signaux de luminescence (accompagnés de l'excitation laser correspondante) en fonction du temps pour une même période de modulation laser, un même temps de déclin et quatre temps de montée différents ;
- La figure 14 montre six exemples de dépendance de l'intensité moyenne de luminescence mesurée selon la fréquence laser pour six temps de montée différents avec un même temps de déclin.

## DESCRIPTION DETAILLEE D'AU MOINS UN MODE DE REALISATION DE L'INVENTION

Sauf précision contraire, un même élément apparaissant sur des figures différentes présente une référence unique.

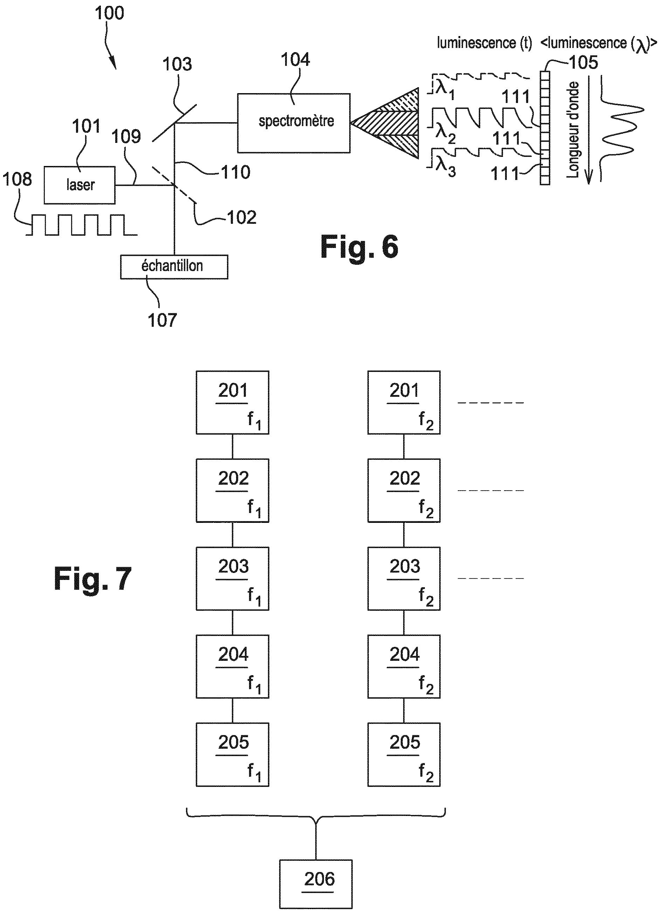

La figure 6 représente schématiquement une installation 100 de détermination des temps de déclin d'un signal de luminescence d'une région d'intérêt d'un échantillon selon un mode de réalisation de l'invention.

Le fonctionnement de l'installation 100 sera également décrit en référence à la figure 7 qui représente les différentes étapes d'un exemple de procédé 200 de détermination des temps de déclin d'un signal de luminescence d'une région d'intérêt d'un échantillon selon l'invention.

L'installation 100 vise à déterminer les temps de déclin d'un signal de luminescence d'une région d'intérêt 106 d'un échantillon 107.

L'installation 100 comporte :

- Une source laser 101 ;
- Un miroir semi-réfléchissant 102 ;
- Un miroir 103 ;
- Un spectromètre 104 ;
- Un capteur 105 tel qu'une barrette CCD « Charged Coupled Device ».

La source laser 101 est une source laser modulée périodiquement en créneaux 108 selon une fréquence de modulation que l'on peut faire varier. La longueur d'onde de la source laser appartient au domaine du visible ou de l'infrarouge et la puissance d'excitation est de l'ordre du milliwatt. On peut par exemple utiliser une diode laser (Picoquant™,...) associée à un générateur de signaux externe (par exemple du type 33622A de la société Keysight Technologies™) afin de générer le signal optique en créneaux d'une fréquence jusqu'à quelques dizaines à centaines de Mhz.

Selon une étape 201 du procédé 200, on commence par exciter la région d'intérêt 106 de l'échantillon à analyser à l'aide d'un signal laser 108 modulé en créneaux selon une première fréquence de modulation $f_1$. L'excitation laser 109 correspondant au signal en créneaux 108 se réfléchit sur le miroir semi-réfléchissant 102 avant d'atteindre la région d'intérêt 106.

Sous cette excitation lumineuse, selon une étape 202, la région d'intérêt 106 va émettre un signal de luminescence 110 qui se réfracte à travers le miroir semi-réfléchissant 102 puis se réfléchit sur le miroir 103 pour être transmis au spectromètre 104.

Selon une étape 203, le signal de luminescence 110 est analysé spectralement par le spectromètre 104 qui va permettre la séparation spectrale du signal de luminescence 110 en une pluralité de signaux de luminescence associés chacun à une longueur d'onde donnée ; ici, trois signaux de luminescence mono-longueur d'onde associés respectivement aux longueurs d'onde $\lambda_1$, $\lambda_2$ et $\lambda_3$ sont représentés. La séparation spectrale par le spectromètre est réalisée de façon connue par l'homme du métier, par exemple à l'aide d'un premier miroir sphérique qui renvoie le faisceau parallèle vers un réseau plan, la lumière diffractée par ce réseau plan étant ensuite focalisée par un second miroir sphérique vers le capteur 105 sur lequel se forme le spectre.

Ainsi, selon une étape 204, chacun des signaux de luminescence mono-longueur d'onde est transmis vers le capteur 105. Le capteur 105 est par exemple un capteur CCD tel qu'une barrette CCD comportant une pluralité de pixels ou mono-capteurs 111 adaptés et configurés pour recevoir un des signaux de luminescence mono-longueur d'onde. Ces mono-capteurs 111 sont disposés linéairement (par exemple de bas en haut) sur le capteur 105, chaque pixel mesurant une portion du spectre correspondant à une longueur d'onde donnée $\lambda_1$, $\lambda_2$ et $\lambda_3$.

Selon une étape 205, chaque mono-capteur 111 ou pixel du capteur 105 va fournir un signal électrique reproduisant l'intensité lumineuse moyenne de chaque signal mono-longueur d'onde reçu. Ainsi, à la fréquence de modulation $f_1$ du laser 101, chaque mono-capteur détecte un spectre de luminescence moyen car il n'a aucune résolution temporelle. Pour chaque longueur d'onde détectée par un mono-capteur, le signal moyen est fonction des caractéristiques du faisceau laser incident, du rendement de luminescence et du temps de vie à cette longueur d'onde.

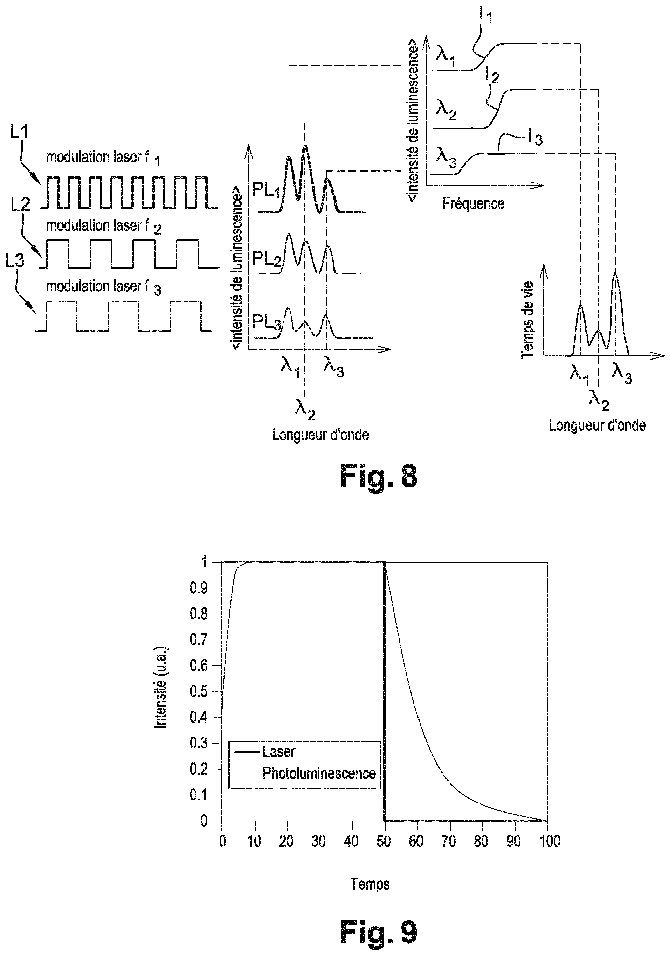

Les étapes 201 à 205 réalisées pour une fréquence $f_1$ de modulation de la source laser 101 sont ensuite répétées pour une fréquence $f_2$ de modulation de la source laser 101 différente de $f_1$. De façon générale, les étapes 201 à 205 sont répétées pour une pluralité de fréquences $f_i$ (avec i variant de 1 à n et n strictement supérieur à 2) différentes les unes des autres. Ainsi, à titre illustratif, la figure 8 représente trois signaux L1, L2, L3 en créneaux modulés représentant les signaux d'excitation laser respectivement modulés à des fréquences $f_1$, $f_2$ et $f_3$.

Comme illustré en figure 8, pour une fréquence de modulation donnée, on obtient différents pics de luminescence (intensité moyenne mesurée par chaque mono-capteur) correspondant à une longueur d'onde donnée. On peut donc reconstituer l'évolution de l'intensité moyenne de la luminescence en fonction de la longueur d'onde (cf. les trois courbes PL1, PL2 et PL3 d'évolution respectivement pour les fréquences de modulation $f_1$, $f_2$ et $f_3$). Il est à noter que l'intensité moyenne de luminescence, pour une même longueur d'onde, varie d'une fréquence de modulation à l'autre.

A partir de ces courbes PL1, PL2 et PL3 on peut reconstituer l'évolution de l'intensité moyenne de luminescence de chaque signal mono-longueur d'onde (i.e. respectivement pour chaque longueur d'onde $\lambda_1$, $\lambda_2$ et $\lambda_3$) en fonction de la fréquence de modulation du laser. Ces évolutions sont illustrées sur les courbes I1, I2 et I3 en figure 8.

Nous allons expliquer dans ce qui suit comment déterminer à partir des courbes I1, I2 et I3, selon l'étape 206 du procédé selon l'invention, les temps de vie correspondant à chaque longueur d'onde associée $\lambda_1$, $\lambda_2$ et $\lambda_3$. On notera que, sous certaines conditions, le procédé selon l'invention permet également de mesurer le temps de montée correspondant à chaque longueur d'onde associée $\lambda_1$, $\lambda_2$ et $\lambda_3$.

Lors d'une excitation avec un laser modulé en créneaux et si on suppose un comportement temporel du signal de luminescence qui varie en simple exponentielle, le signal de luminescence, à une longueur d'onde donnée, va suivre le signal laser mais va être caractérisé en plus par un temps de montée $\tau_{montée}$ et un temps de déclin $\tau_{déclin}$ qui correspond au temps de vie que l'on cherche à mesurer.

La figure 9 illustre un créneau du signal laser ainsi que le signal de luminescence en fonction du temps en $\mu s$ pour une longueur d'onde donnée. Les 2 signaux ont été schématisés avec la même amplitude de manière arbitraire.

On note $t_0$ le début d'une période du créneau de période T ($t_0=0$ et T=100 MHz. sur la figure 9). Pour des temps compris entre $t_0$ et $t_0+T$, l'intensité de luminescence $I_{PL}(t)$ s'écrit :

$$I_{PL}(t) = I_A + (I_O - I_A)\left(1 - \exp\left(-\frac{t - t_0}{\tau_{montée}}\right)\right) \text{ pour } t_0 \leq t \leq t_0 + \frac{T}{2}$$

$$I_{PL}(t) = \left[I_A + (I_O - I_A)\left(1 - \exp\left(-\frac{T}{2\tau_{montée}}\right)\right)\right] \exp\left(-\frac{t - (t_0 + T/2)}{\tau_{déclin}}\right) \text{ pour } t_0 + \frac{T}{2} \leq t \leq t_0 + T$$

avec

$$I_A = \frac{I_O \left(1 - \exp\left(-\frac{T}{2\tau_{montée}}\right)\right) \exp\left(-\frac{T}{2\tau_{déclin}}\right)}{1 - \exp\left(-\frac{T}{2\tau_{montée}}\right) \exp\left(-\frac{T}{2\tau_{déclin}}\right)}$$

et $I_O$ l'intensité de luminescence maximale. Celle-ci peut être mesurée lorsque le laser émet en mode continu par exemple. On pose arbitrairement $I_O = 1$.

Selon les valeurs des temps de montée et de déclin on va distinguer deux régimes : transitoire et permanent.

7

Il convient préférentiellement de se placer dans le régime permanent pour faire les mesures. Celui-ci s'établit après un temps caractéristique $t_{perm}$ donné par :

$$t_{perm} = \frac{4\tau_{déclin}\tau_{montée}}{\tau_{déclin} + \tau_{montée}}$$

Ainsi, si l'on prend par exemple un temps de déclin de 1 μs et un temps de montée de 100 ns, le temps d'établissement du régime permanent est de 360 ns environ. Ce temps caractéristique devient plus important si les temps de montée et de déclin sont comparables. Pour $\tau_{déclin} = \tau_{montée} = 1$ μs, le temps d'établissement du régime permanent est d'environ 2 μs.

La source laser, par exemple composée d'un générateur de tension et d'une diode laser, doit également générer une modulation en créneau du laser avec des temps de descente et de montée négligeables par rapport aux temps de montée et de déclin que l'on cherche à mesurer. Les temps typiques des diodes sont en général inférieurs à 1 ns.

La limite basse des temps de vie mesurables est de l'ordre de l'inverse de la fréquence maximale de cycle supportée par la diode (typiquement quelques dizaines à centaines de Mhz) mais il est préférable de s'assurer que le signal en créneau ne soit pas déformé aux hautes fréquences. La mesure peut donc être limitée par la diode laser. Il n'y a pas de limite haute, le temps d'acquisition étant simplement choisi suffisamment long pour éviter des erreurs d'intégration. On pourra prendre arbitrairement $t_{acq} = 100$ T.

Nous distinguerons dans ce qui suit deux cas :

- Un premier cas selon lequel on peut négliger le temps de montée du signal de luminescence devant le temps de déclin ;
- Un second cas selon lequel le temps de montée du signal de luminescence n'est pas négligeable.

Cas où le temps de montée est négligeable

Dans un premier temps on suppose que le temps de montée est négligeable devant le temps de déclin. L'intensité de luminescence $I_{PL}(t)$ s'écrit alors :

$$I_{PL}(t) = I_O \; pour \; t_0 \leq t \leq t_0 + \frac{T}{2}$$

$$I_{PL}(t) = I_O \exp\left(-\frac{t - (t_0 + T/2)}{\tau_{déclin}}\right) \; pour \; t_0 + \frac{T}{2} \leq t \leq t_0 + T$$

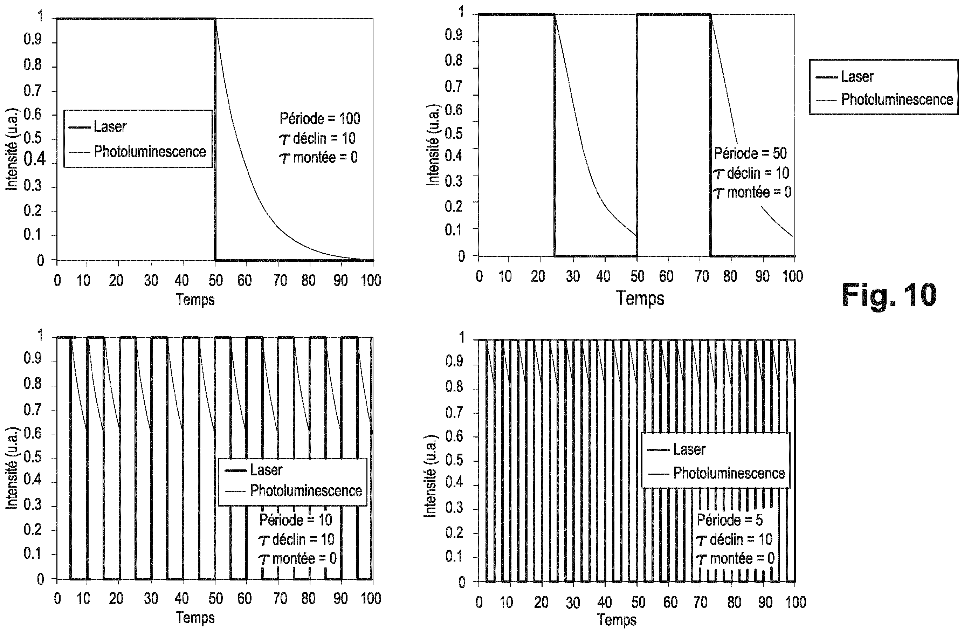

En faisant varier la fréquence f du laser (où f = 1/T), le signal moyen de luminescence à une longueur d'onde donnée va varier comme sur la figure 10 où quatre signaux de luminescence (accompagnés de l'excitation laser correspondante) sont représentés en fonction du temps en μs pour respectivement des périodes T égales à 100, 50, 10 et 5 MHz.

Quand la fréquence f augmente (et donc la période T diminue) on observe une réduction de la portion de la courbe en décroissance exponentielle. Ainsi, l'intensité moyenne de luminescence est fonction de la fréquence laser f. L'intensité $I_{CCD}(T)$ réellement mesurée par le capteur 105 peut être vue comme la valeur moyenne de l'intensité de luminescence multipliée par le temps d'acquisition ou comme le nombre de photons collectés sur une période (donc l'aire sur une période) multiplié par le nombre de périodes (soit le temps d'acquisition divisé par la période).

L'intensité $I_{CCD}(T)$ réellement mesurée par chaque mono-capteur 111 (donc pour une longueur d'onde donnée) va dépendre du temps de déclin comme suit :

$$I_{CCD}(T) \propto \frac{I_0}{2} + I_O\tau_{déclin}\left(1 - \exp\left(-\frac{T}{2\tau_{déclin}}\right)\right) \text{ (relation 1)}$$

Comme vu plus haut, le procédé selon l'invention permet de reconstituer l'évolution de l'intensité moyenne de luminescence de chaque signal mono-longueur d'onde en fonction de la fréquence de modulation du laser (cf. courbes I1, I2 et I3 de la figure 8).

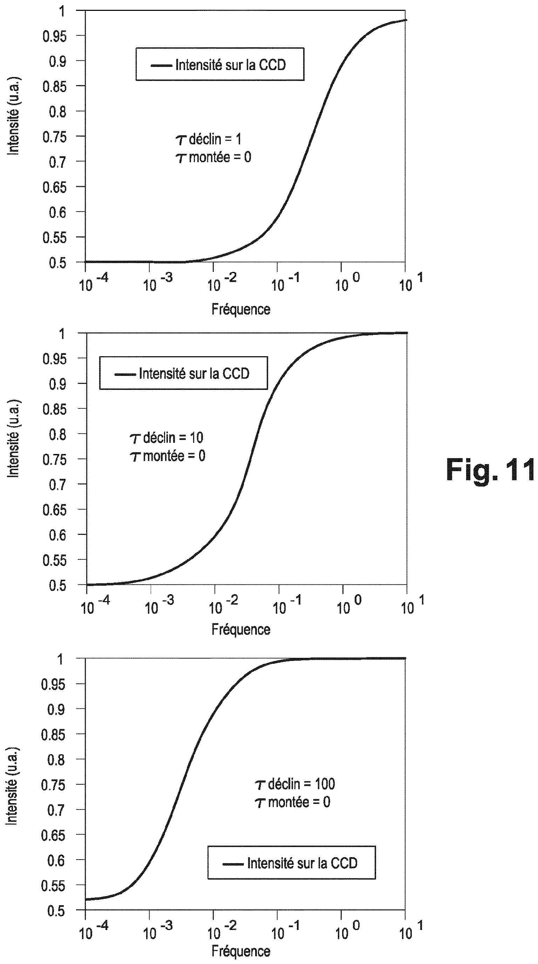

Trois exemples de dépendance de l'intensité moyenne de luminescence mesurée $I_{CCD}(T)$ selon la fréquence laser (i.e. selon la période T en MHz) sont donnés sur la figure 11, pour trois temps de déclin différents (respectivement des temps de déclin égaux à 1, 10 et 100 µs. avec ici un temps de montée négligeable).

On observe sur la figure 11 que l'intensité mesurée en fonction de la fréquence dépend du temps de déclin. Cette observation est confirmée par la relation 1 ci-dessus.

Selon l'étape 206 du procédé selon l'invention, l'établissement de la courbe d'intensité mesurée $I_{CCD}(T)$ en fonction de la fréquence laser permet de remonter à la valeur du temps de déclin en ajustant (réalisation d'un « fit » selon la terminologie anglaise) la courbe à l'aide de la relation 1 ci-dessus. Cet ajustement pourra par exemple être réalisé en minimisant la distance courbe-résultats expérimentaux. A titre d'exemple, et de façon non limitative, la distance pourra être la distance des moindres carrés ou la distance des moindres valeurs absolues. Cet ajustement est par exemple réalisé par un calculateur, un microprocesseur ou un ordinateur programmé.

On obtient ainsi pour chaque intensité moyenne mesurée par un mono-capteur 106 un temps de déclin correspondant.

Comme le capteur 105 permet la mesure simultanée d'une pluralité de longueurs d'onde ($\lambda_1$, $\lambda_2$ et $\lambda_3$ sur la figure 6), on peut appliquer l'étape précédente en chaque point du spectre (i.e. à chaque longueur d'onde) pour obtenir les temps de déclin à toutes les longueurs d'onde.

La relation 1 a été obtenue dans l'hypothèse où le temps de montée est négligeable.

Le procédé selon l'invention s'applique tout autant dans le cas d'un temps de montée non négligeable devant le temps de déclin.

Cas où le temps de montée n'est pas négligeable

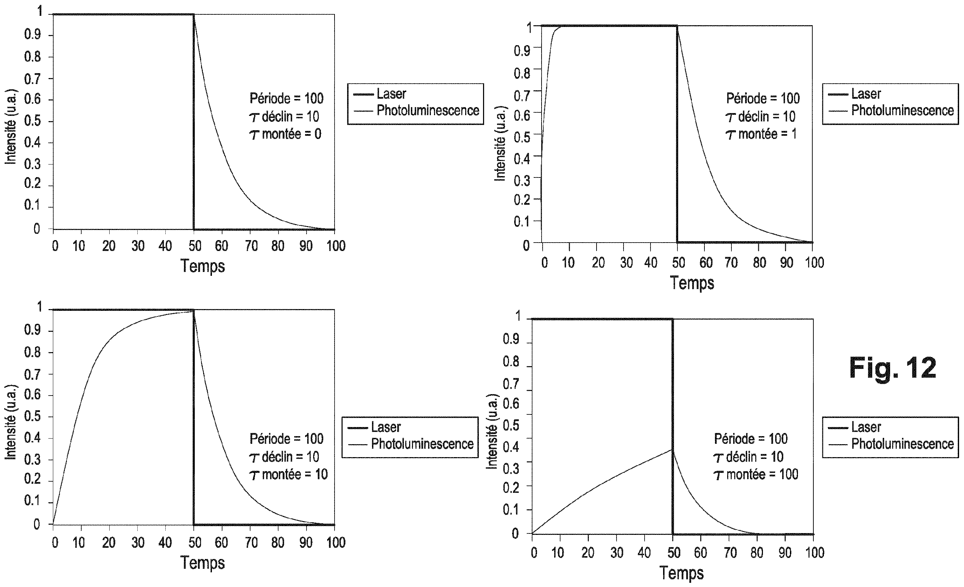

Dans le cas d'un temps de montée non négligeable, la forme du signal de luminescence dans la demi-période où le laser est allumé doit être prise en compte pour le calcul de l'intensité moyenne de luminescence. Selon la valeur du temps de montée le signal est plus ou moins affecté. Ce phénomène est illustré sur la figure 12 où l'on observe pour quatre formes de signaux de luminescence différents pour un même temps de déclin $\tau_{déclin}$=10µs., une même période (100 MHz) du signal laser et quatre temps de montée $\tau_{montée}$ différents (respectivement 0, 1, 10 et 100 µs.).

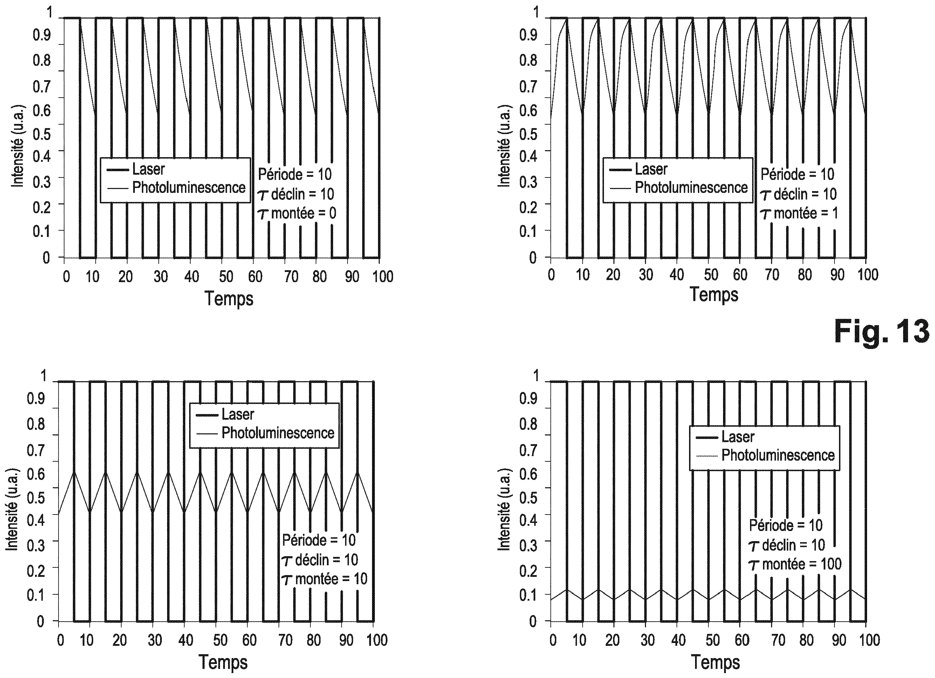

En augmentant la fréquence f du laser (où f = 1/T), le signal moyen de luminescence à une longueur d'onde donnée va varier comme sur la figure 13 où quatre signaux de luminescence (accompagnés de l'excitation laser correspondante) sont représentés en fonction du temps pour une période T égale à 10 en unité arbitraire, un même temps de déclin $\tau_{déclin}$=10µs. et quatre temps de montée $\tau_{montée}$ différents (respectivement 0, 1, 10 et 100 µs.).

L'intensité $I_{CCD}(T)$ réellement mesurée par chaque mono-capteur 111 (donc pour une longueur d'onde donnée) va dépendre du temps de déclin et du temps de montée comme suit :

$$I_{CCD}(T) \propto$$
$$\frac{I_0}{2} + (I_O - I_A)\tau_{montée}\left(\exp\left(-\frac{T}{2\tau_{montée}}\right) - 1\right) +$$
$$\left[I_A + (I_O - I_A)\left(1 - \exp\left(-\frac{T}{2\tau_{montée}}\right)\right)\right]\tau_{déclin}\left(1 - \exp\left(-\frac{T}{2\tau_{déclin}}\right)\right) \text{ (relation 2)}$$

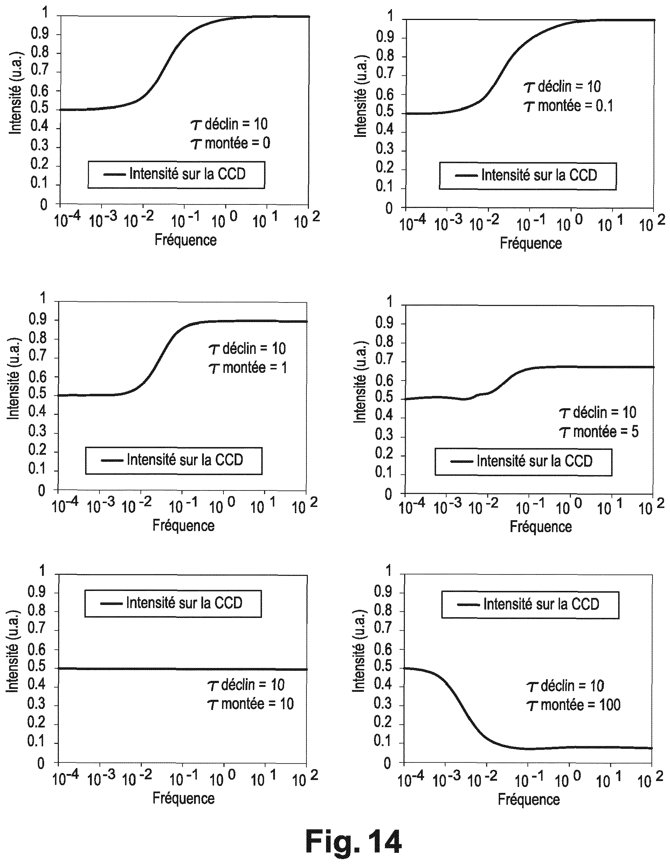

Six exemples de dépendance de l'intensité moyenne de luminescence mesurée $I_{CCD}(T)$ selon la fréquence laser sont donnés sur la figure 14, pour six temps de montée différents (respectivement égaux à 1, 0.1, 1, 5, 10 et 100 µs.) avec ici un même temps de déclin égal à 10 µs.

On observe bien sur la figure 14 que l'intensité mesurée en fonction de la fréquence dépend du temps de montée. Cette observation est confirmée par la relation 2 ci-dessus.

Selon l'étape 206 du procédé selon l'invention, l'établissement de la courbe d'intensité mesurée $I_{CCD}(T)$ en fonction de la fréquence laser permet de remonter à la valeur du temps de déclin et du temps de montée en ajustant (réalisation d'un « fit » selon la terminologie anglaise) la courbe à l'aide de la relation 2 ci-dessus. Cet ajustement pourra par exemple être réalisé en minimisant la distance courbe-résultats expérimentaux. A titre d'exemple, et de façon non limitative, la distance pourra être la distance des moindres carrés ou la distance des moindres valeurs absolues. Cet ajustement est par exemple réalisé par un calculateur, un microprocesseur ou un ordinateur programmé.

On remarque sur la figure 14 que la valeur maximale atteinte est toujours inférieure à $I_0$ ($I_0$=1 en unité arbitraire u.a.) lorsque le temps de montée est non nul et diminue d'autant que ce dernier est grand. Par ailleurs, lorsque le temps de montée devient supérieur au temps de déclin, l'intensité mesurée par le mono-capteur 111 décroît avec la fréquence. En général, les temps de déclin sont largement supérieurs aux temps de montée. Les cas les plus typiques sont donc les 2 premiers cas de figure. Il est néanmoins possible que certains temps de montée se rapprochent des temps de déclin, comme cela peut être le cas pour le silicium cristallin (Emel'yanov, A. M. in High-Efficiency Solar Cells (eds. Wang, X. & Wang, Z. M.) 59-83 (Springer International Publishing, 2014)). Si le temps de montée devient largement inférieur au temps de déclin il n'aura plus d'incidence sur le signal mesuré et la technique ne pourra déterminer que le temps de déclin (cas d'un temps de montée négligeable par rapport au temps de déclin ; dans ce cas, on revient à la relation 1). On notera que pour un temps de montée égal au temps de déclin, la technique a beaucoup moins de sensibilité, ce cas de figure étant toutefois très peu probable.

Le procédé et l'installation selon l'invention ne sont naturellement pas limités aux variantes de réalisation qui viennent d'être décrites à titre indicatif et nullement limitatif en référence aux figures.

Ainsi, la description a été faite avec un temps où le laser est allumé égal au temps où le laser est éteint c'est-à-dire un rapport cyclique égal à 50%. Pour des temps de vie longs, il peut être intéressant d'adapter le rapport cyclique de la modulation laser afin d'améliorer la sensibilité de la mesure en fréquence. En effet, pour une gamme de fréquences égale, un rapport cyclique plus faible permet de décrire une portion différente de la courbe de déclin de luminescence, le rapport cyclique étant défini comme étant le rapport entre la durée d'illumination et la somme de la durée d'illumination et d'extinction. On peut ajuster le rapport cyclique à chaque fréquence laser afin de garder un temps où le laser est allumé constant. Cela permet par exemple de s'assurer que le laser est allumé pendant un temps supérieur au temps de montée quelle que soit la fréquence laser

En outre, la description précédente a été faite en considérant des décroissances en simple exponentielle. Néanmoins d'autres formes de déclin (double exponentielle, ...) peuvent être utilisées pour la modélisation de l'intensité $I_{CCD}(T)$ mesurée par le capteur.

Enfin, la mesure de photoluminescence peut être réalisée avec un banc de macro-photoluminescence c'est-à-dire dont la résolution spatiale est de taille millimétrique (diamètre du faisceau laser collimaté). Elle peut tout aussi bien fonctionner avec un banc de micro-photoluminescence comprenant un objectif de focalisation. La résolution spatiale peut alors descendre sous la barre du micron selon le type d'objectif. L'intérêt est de pouvoir balayer le faisceau laser sur la surface de l'échantillon pour réaliser une cartographie spectrale de durée de vie.

**Revendications**

1. Procédé (200) de détermination des temps de déclin d'un signal de luminescence d'une région d'intérêt (106) d'un échantillon (107) comportant les étapes suivantes :

   - Excitation (201) de ladite région d'intérêt (106) au moyen d'une source laser (101) modulée en créneau à une fréquence donnée ;
   - Séparation spectrale (202, 203) du signal de luminescence émis par ladite région d'intérêt (106) en une pluralité de signaux de luminescence associés chacun à une longueur d'onde donnée, dits signaux mono-longueur d'onde ;
   - Transmission (204) desdits signaux mono-longueur d'onde vers un capteur linéaire (105) comportant une pluralité de mono-capteurs (111) disposés linéairement, chacun desdits mono-capteurs (111) étant adapté pour recevoir un desdits signaux mono-longueur d'onde ;
   - Détermination (205) de l'intensité moyenne de chacun desdits signaux mono-longueur d'onde reçus par le capteur linéaire (105) ;
   les étapes précédentes étant répétées pour une pluralité de fréquences de modulation de la source laser (101), le procédé comportant en outre une étape (206) de détermination des temps de déclin du signal de luminescence de la région d'intérêt (106), chaque temps de déclin étant déterminé, pour une longueur d'onde donnée, à partir de l'évolution de l'intensité moyenne du signal mono-longueur d'onde à ladite longueur d'onde en fonction de la fréquence de modulation du laser.

2. Procédé selon la revendication précédente **caractérisé en ce que** ledit capteur linéaire est un capteur CCD.

3. Procédé selon l'une des revendications précédentes **caractérisé en ce que** la séparation spectrale est obtenue à l'aide d'un spectromètre.

4. Procédé selon l'une des revendications précédentes **caractérisé en ce qu'**il comporte en outre l'étape de détermination des temps de montée du signal de luminescence de la région d'intérêt, chaque temps de montée étant déterminé, pour une longueur d'onde donnée, à partir de l'évolution de l'intensité moyenne du signal mono-longueur d'onde à ladite longueur d'onde en fonction de la fréquence de modulation du laser.

5. Procédé selon l'une des revendications précédentes **caractérisé en ce que** l'étape de détermination des temps de déclin est réalisée en ajustant la courbe d'évolution de l'intensité moyenne du signal mono-longueur d'onde en fonction de la fréquence de modulation du laser et une formule représentative de la dépendance entre l'intensité moyenne du signal mono-longueur d'onde et la fréquence de modulation du laser.

**6.** Procédé selon la revendication précédente **caractérisé en ce que** ladite formule est donnée par la relation suivante :

$$I_{CCD}(T) \propto \frac{I_0}{2} + I_0 \tau_{déclin} \left( 1 - \exp\left( -\frac{T}{2\tau_{déclin}} \right) \right)$$

dans laquelle,

$I_{CCD}(T)$ désigne l'intensité moyenne du signal mono-longueur d'onde,
T désigne la période du signal en créneau de la source laser,
$I_0$ désigne l'intensité de luminescence maximale, et
$\tau_{déclin}$ désigne le temps de déclin.

**7.** Procédé selon la revendication 5 **caractérisé en ce que** ladite formule est donnée par la relation suivante :

$$I_{CCD}(T) \propto \frac{I_0}{2} + (I_0 - I_A)\tau_{montée} \left( \exp\left( -\frac{T}{2\tau_{montée}} \right) - 1 \right)$$
$$+ \left[ I_A + (I_0 - I_A)\left( 1 - \exp\left( -\frac{T}{2\tau_{montée}} \right) \right) \right] \tau_{déclin} \left( 1 - \exp\left( -\frac{T}{2\tau_{déclin}} \right) \right)$$

dans laquelle,

$I_{CCD}(T)$ désigne l'intensité moyenne du signal mono-longueur d'onde,
T désigne la période du signal en créneau de la source laser,
$I_0$ désigne l'intensité de luminescence maximale,
$\tau_{déclin}$ désigne le temps de déclin,
$\tau_{montée}$ désigne le temps de montée,

avec

$$I_A = \frac{I_0 \left( 1 - \exp\left( -\frac{T}{2\tau_{montée}} \right) \right) \exp\left( -\frac{T}{2\tau_{déclin}} \right)}{1 - \exp\left( -\frac{T}{2\tau_{montée}} \right) \exp\left( -\frac{T}{2\tau_{déclin}} \right)}$$

**8.** Procédé selon l'une des revendications précédentes **caractérisé en ce que** les étapes sont répétées pour au moins trois fréquences de modulation de la source laser.

**9.** Procédé selon l'une des revendications précédentes **caractérisé en ce que** le rapport cyclique du signal de la source laser modulée en créneau à une fréquence donnée est adapté en fonction de la durée des temps de déclin à mesurer.

**10.** Installation pour la mise en œuvre du procédé de détermination des temps de déclin d'un signal de luminescence d'une région d'intérêt d'un échantillon selon l'une des revendications précédentes comportant :

- une source laser modulée en créneau à une fréquence donnée, ladite fréquence étant variable, adaptée pour exciter ladite région d'intérêt ;
- un séparateur spectral adapté pour séparer spectralement le signal de luminescence émis par ladite région d'intérêt en une pluralité de signaux de luminescence associés chacun à une longueur d'onde donnée, dits signaux mono-longueur d'onde ;
- un capteur linéaire comportant une pluralité de mono-capteurs disposés linéairement ;
- un dispositif optique adapté pour transmettre lesdits signaux mono-longueur d'onde vers ledit capteur linéaire, chacun desdits mono-capteurs étant adapté pour recevoir un desdits signaux mono-longueur d'onde ;
- des moyens de calcul adaptés pour déterminer l'intensité moyenne de chacun desdits signaux mono-longueur d'onde reçu par le capteur linéaire et pour déterminer des temps de déclin du signal de luminescence de la région d'intérêt, chaque temps de déclin étant déterminé, pour une longueur d'onde donnée, à partir de l'évolution de l'intensité moyenne du signal mono-longueur d'onde à ladite longueur d'onde en fonction de la fréquence de modulation du laser.

## Patentansprüche

1. Verfahren (200) zur Bestimmung der Abschwächungszeiten eines Lumineszenzsignals einer Region von Interesse (106) einer Probe (107), umfassend die folgenden Schritte:

   - Erregung (201) der genannten Region von Interesse (106) mittels einer Laserquelle (101), die in einer bestimmten Frequenz im Abschnitt moduliert wird;
   - Spektrale Trennung (202, 203) des von der genannten Region von Interesse (106) ausgegebenen Lumineszenzsignals in eine Vielzahl von Lumineszenzsignalen, die jeweils einer bestimmten Wellenlänge zugeordnet sind, bezeichnet als Mono-Wellenlänge;
   - Übertragung (204) der genannten Mono-Wellenlängensignale zu einem linearen Sensor (105), umfassend eine Vielzahl von Mono-Sensoren (111), die linear angeordnet sind, wobei jeder der genannten Mono-Sensoren (111) geeignet ist, um eines der genannten Mono-Wellenlängensignale zu empfangen;
   - Bestimmung (205) der durchschnittlichen Intensität jedes der genannten Mono-Wellenlängensignale, die von dem linearen Sensor (105) empfangen werden;
   wobei die voranstehenden Schritte für eine Vielzahl von Modulationsfrequenzen der Laserquelle (101) wiederholt werden, wobei das Verfahren darüber hinaus einen Schritt (206) zur Bestimmung der Abschwächungszeit des Lumineszenzsignals der Region von Interesse (106) umfasst, wobei jede Abschwächungszeit für eine bestimmte Wellenlänge ausgehend von der Entwicklung der durchschnittlichen Intensität des Mono-Wellenlängensignals der genannten Wellenlänge in Abhängigkeit von der Modulationsfrequenz des Lasers bestimmt wird.

2. Verfahren gemäß dem voranstehenden Anspruch, **dadurch gekennzeichnet, dass** der genannte lineare Sensor ein CCD-Sensor ist.

3. Verfahren gemäß einem der voranstehenden Ansprüche, **dadurch gekennzeichnet, dass** die spektrale Trennung mithilfe eines Spektrometers erhalten wird.

4. Verfahren gemäß einem der voranstehenden Ansprüche, **dadurch gekennzeichnet, dass** es darüber hinaus den Bestimmungsschritt der Anstiegszeiten des Lumineszenzsignals der Region von Interesse umfasst, wobei jede Anstiegszeit für eine bestimmte Wellenlänge ausgehend von der Entwicklung der durchschnittlichen Signalintensität des Mono-Wellenlängensignals in der genannten Wellenlänge in Abhängigkeit von der Modulationsfrequenz des Lasers bestimmt wird.

5. Verfahren gemäß einem der voranstehenden Ansprüche, **dadurch gekennzeichnet, dass** der Bestimmungsschritt der Abschwächungszeiten durch Anpassen der Entwicklungskurve der durchschnittlichen Intensität des Mono-Wellenlängensignals in Abhängigkeit von der Modulationsfrequenz des Lasers und einer Formel, die die Abhängigkeit zwischen der durchschnittlichen Intensität des Mono-Wellenlängensignals und der Modulationsfrequenz des Lasers realisiert wird.

6. Verfahren gemäß dem voranstehenden Anspruch, **dadurch gekennzeichnet, dass** die genannte Formel durch die folgende Beziehung angegeben wird:

$$I_{CCD}(T) \propto \frac{I_0}{2} + I_0 \tau_{déclin}\left(1 - \exp\left(-\frac{T}{2\tau_{déclin}}\right)\right)$$

in der

$I_{CC}(T)$ die durchschnittliche Intensität des Mono-Wellenlängensignals bezeichnet,
T die Periode des Signals im Abschnitt der Laserquelle bezeichnet,
$I_0$ die maximale Lumineszenzintensität bezeichnet und
$\tau_{declin}$ die Abschwächungszeit bezeichnet.

**7.** Verfahren gemäß Anspruch 5, **dadurch gekennzeichnet, dass** die genannte Formel durch die folgende Beziehung angegeben wird:

$$I_{CCD}(T) \propto \frac{I_0}{2} + (I_O - I_A)\tau_{montée}\left(\exp\left(-\frac{T}{2\tau_{montée}}\right) - 1\right)$$
$$+ \left[I_A + (I_O - I_A)\left(1 - \exp\left(-\frac{T}{2\tau_{montée}}\right)\right)\right]\tau_{déclin}\left(1 - \exp\left(-\frac{T}{2\tau_{déclin}}\right)\right)$$

in der

$I_{CC}(T)$ die durchschnittliche Intensität des Mono-Wellenlängensignals bezeichnet,
$T$ die Periode des Signals im Abschnitt der Laserquelle bezeichnet,
$I_0$ die maximale Lumineszenzintensität bezeichnet
$\tau_{declin}$ die Abschwächungszeit bezeichnet
$\tau_{montée}$ die Verstärkungszeit bezeichnet.

wobei

$$I_A = \frac{I_O\left(1 - \exp\left(-\frac{T}{2\tau_{montée}}\right)\right)\exp\left(-\frac{T}{2\tau_{déclin}}\right)}{1 - \exp\left(-\frac{T}{2\tau_{montée}}\right)\exp\left(-\frac{T}{2\tau_{déclin}}\right)}$$

**8.** Verfahren gemäß einem der voranstehenden Ansprüche, **dadurch gekennzeichnet, dass** die Schritte für wenigstens drei Modulationsfrequenzen der Laserquelle wiederholt werden.

**9.** Verfahren gemäß einem der voranstehenden Ansprüche, **dadurch gekennzeichnet, dass** das zyklische Verhältnis der im Abschnitt in einer bestimmten Frequenz modulierten Laserquelle in Abhängigkeit von der Dauer der zu messenden Abschwächungszeiten angepasst wird.

**10.** Anlage für die Umsetzung des Bestimmungsverfahrens der Abschwächungszeiten eines Lumineszenzsignals einer Region von Interesse einer Probe gemäß einem der voranstehenden Ansprüche, umfassend:

- eine im Abschnitt in einer bestimmten Frequenz modulierte Laserquelle, wobei die genannte Frequenz variabel, zum Erregen der genannten Region von Interesse geeignet ist,
- einen spektralen Trenner, der zum spektralen Trennen des von der genannten Region von Interesse ausgegebenen Signalen in einer Vielzahl von Lumineszenzsignalen geeignet ist, die jeweils einer bestimmten Wellenlänge zugeordnet sind, bezeichnet als Mono-Wellenlängensignale,
- einen linearen Sensor, der eine Vielzahl von linear angeordneten Mono-Sensoren umfasst,
- eine optische Vorrichtung, die zum Übertragen der genannten Mono-Wellenlängensignale auf den genannten linearen Sensor geeignet ist, wobei jeder der genannten Mono-Sensoren geeignet ist, um eines der genannten Mono-Wellenlängensignale zu empfangen;
- Berechnungsmittel, die zum Bestimmen der durchschnittlichen Intensität jedes der genannten Mono-Wellenlängensignale, das von dem linearen Sensor empfangen ist, und zum Bestimmen von Abschwächungszeiten des Lumineszenzsignals der Region von Interesse geeignet sind, wobei jede Abschwächungszeit für eine bestimmte Wellenlänge ausgehend von der Entwicklung der durchschnittlichen Intensität des Mono-Wellenlängensignals in der genannten Wellenlänge in Abhängigkeit von der Modulationsfrequenz des Lasers bestimmt ist.

**Claims**

**1.** Method (200) for determining the decline time of a luminescence signal of a region of interest (106) of a sample (107) comprising the following steps:

- Excitation (201) of said region of interest (106) using a time slot-modulated laser source (101) at a given frequency;
- Spectral separation (202, 203) of the luminescence signal emitted by said region of interest (106) into a plurality of luminescence signals each associated with a given wavelength, so-called single-wavelength signals;
- Transmission (204) of said single-wavelength signals to a linear sensor (105) comprising a plurality of single-sensors (111) arranged linearly, each one of said single-sensors (111) being suitable for receiving one of said single-wavelength signals;
- Determination (205) of the average intensity of each one of said single-wavelength signals received by the linear sensor (105);

the preceding steps were repeated for a plurality of modulation frequencies of the laser source (101),
the method further comprising a step (206) of determining decline times of the luminescence signal of the region of interest (106), each decline time being determined, for a given wavelength, from the change in the average intensity of the single-wavelength signal at said wavelength according to the modulation frequency of the laser.

2. Method according to the preceding claim **characterised in that** said linear sensor is a CCD sensor.

3. Method according to one of the preceding claims **characterised in that** the spectral separation is obtained using a spectrometer.

4. Method according to one of the preceding claims **characterised in that** it further comprises the step of determining rise times of the luminescence signal of the region of interest, each rise time being determined, for a given wavelength, from the change in the average intensity of the single-wavelength signal at said wavelength according to the modulation frequency of the laser.

5. Method according to one of the preceding claims **characterised in that** the step of determining the decline time is carried out by adjusting the evolution curve of the average intensity of the single-wavelength signal according to the modulation frequency of the laser and a formula representative of the dependency between the average intensity of the single-wavelength signal and the modulation frequency of the laser.

6. Method according to the preceding claim **characterised in that** said formula is given by the following relationship:

$$I_{CCD}(T) \propto \frac{I_0}{2} + I_0 \tau_{decline}\left(1 - \exp\left(-\frac{T}{2\tau_{decline}}\right)\right)$$

wherein,

$I_{CCD}(T)$ designates the average intensity of the single-wavelength signal,
T designates the period of the time-slot signal of the laser source,
$I_0$ designates the intensity of the maximum luminescence, and
$\tau_{decline}$ designates the decline time.

7. Method according to claim 5 **characterised in that** said formula is given by the following relationship:

$$I_{CCD}(T) \propto \frac{I_0}{2} + (I_0 - I_A)\tau_{rise}\left(\exp\left(-\frac{T}{2\tau_{rise}}\right) - 1\right)$$
$$+ \left[I_A + (I_0 - I_A)\left(1 - \exp\left(-\frac{T}{2\tau_{rise}}\right)\right)\right]\tau_{decline}\left(1 - \exp\left(-\frac{T}{2\tau_{decline}}\right)\right)$$

wherein,

$I_{CCD}(T)$ designates the average intensity of the single-wavelength signal,
T designates the period of the time-slot signal of the laser source,
$I_0$ designates the intensity of the maximum luminescence,
$\tau_{decline}$ designates the decline time,
$\tau_{rise}$ designates the rise time,

with

$$I_A = \frac{I_0\left(1 - \exp\left(-\frac{T}{2\tau_{rise}}\right)\right)\exp\left(-\frac{T}{2\tau_{decline}}\right)}{1 - \exp\left(-\frac{T}{2\tau_{rise}}\right)\exp\left(-\frac{T}{2\tau_{decline}}\right)}$$

8. Method according to one of the preceding claims **characterised in that** the steps are repeated for at least three modulation frequencies of the laser source.

9. Method according to one of the preceding claims **characterised in that** the duty cycle of the signal of the time slot-modulated laser source at a given frequency is adapted according to the duration of the decline times to be measured.

10. Installation for the implementation of the method for determining the decline time of a luminescence signal of a region of interest of a sample according to one of the preceding claims comprising:

- a time slot-modulated laser source at a given frequency, said frequency being variable, suitable for exciting said region of interest;
- a spectral separator suitable for spectrally separating the luminescence signal emitted by said region of interest into a plurality of luminescence signals each associated with a given wavelength, so-called single-wavelength signals;
- a linear sensor comprising a plurality of single-sensors arranged linearly;
- an optical device suitable for transmitting said single-wavelength signals to said linear sensor, each one of said single-sensors being suitable for receiving one of said single-wavelength signals;
- means of calculation suitable for determining the average intensity of each one of said single-wavelength signals received by the linear sensor and for determining decline times of the luminescence signal of the region of interest, each decline time being determined, for a given wavelength, from the change in the average intensity of the single-wavelength signal at said wavelength according to the modulation frequency of the laser.

Fig. 1

Fig. 2

Fig. 3

luminescence

plage scanée

largeur

intégration

délai variable

synchronisation

Amplitude (u.a.)

Temps

**Fig. 4**

synchronisation

balayage

luminescence

$\tau_1$ $\tau_2$ $\tau_3$ $\tau_4$

longueur d'onde

écran
phosphorescent

longueur d'onde

temps

capteur

**Fig. 5**

Fig. 6

Fig. 7

**Fig. 8**

**Fig. 9**

Fig. 10

Fig. 11

Fig. 12

EP 3 413 035 B1

**Fig. 13**

Fig. 14

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

### Littérature non-brevet citée dans la description

- **BOROWIK.** Measuring the lifetime of silicon nanocrystal solar cell photo-carriers by using Kelvin probe force microscopy and x-ray photoelectron spectroscopy. *Nanotechnology,* 04 Juillet 2014

- **EMEL'YANOV, A. M.** High-Efficiency Solar Cells. Springer International Publishing, 2014, 59-83